# EUROPÄISCHE PATENTSCHRIFT

(11) **EP 1 341 833 B1**
(45) Veröffentlichungstag und Bekanntmachung des Hinweises auf die Patenterteilung: **25.01.2006**
(21) Anmeldenummer: 01998574.6
(22) Anmeldetag: 30.11.2001
(51) Int. Cl.: C08G 18/62, C08G 18/80, C09D 127/12, C09D 175/04

(54) **BESCHICHTUNGSZUSAMMENSETZUNG AUF ACRYLATBASIS ENTHALTEND FLUORMODIFIZIERTE POLYMERE**
ACRYLATE-BASED COATING COMPOSITION CONTAINING FLUOROMODIFIED POLYMERS
COMPOSITION DE REVETEMENT A BASE D'ACRYLATE CONTENANT DES POLYMERES MODIFIES PAR FLUOR

(30) Priorität: 30.11.2000 DE 10059853
(43) Veröffentlichungstag der Anmeldung: 10.09.2003
(73) Patentinhaber: Bollig & Kemper GmbH & Co. KG, 50827 Köln (DE)
(72) Erfinder: NEPPL, Bernhard, 50769 Köln (DE); BOYSEN, Johannes, 50859 Köln (DE)
(74) Vertreter: Dunkelberg, Oliver Thomas Michael
(86) Internationale Anmeldenummer: PCT/DE2001/004479
(87) Internationale Veröffentlichungsnummer: WO 2002/044235

(56) Entgegenhaltungen:
- EP-A- 0 416 329
- EP-A- 0 551 727
- WO-A-96/34064
- US-A- 4 871 591

## Beschreibung

Die vorliegende Erfindung betrifft eine Beschichtungszusammensetzung, die insbesondere für die Herstellung von Klarlackschichten in der Automobilindustrie geeignet ist.

Die Lackierung von Automobilen erfüllt neben dekorativen Eigenschaften wie Farbgebung, Glanz etc. insbesondere Schutzfunktionen hinsichtlich verschiedenster Umwelt- und Witterungseinflüsse wie z.B. saurem Regen, UV-Strahlung etc.
Im Vordergrund hierbei steht allerdings der Korrosionsschutz des Metalls durch den Lackfilm, wobei die Schutzfunktion des Lackfilms auch noch unter widrigen Umständen, wie beispielsweise UV-Strahlung, Steinschlag, mechanischen Einwirkungen (Waschanlage) etc., gewährleistet sein sollte.

Diese gesteigerten Anforderungen haben zur Verwendung von Mehrschichtlackierungen in der Automobilindustrie geführt.

Die am häufigsten verwendete Mehrschichtlackierung ist die im folgenden aufgeführte, sogenannte Vierschichtlackierung, bestehend aus vier Lackschichten unterschiedlicher chemischer Zusammensetzung und Auftragsweise:
Die erste, direkt auf dem vorbehandelten Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.
Die zweite, auf der Elektrocoatschicht befindliche und etwa 20 bis 40 µm dicke Schicht ist eine sogenannte Primerschicht, die einerseits Schutz gegen mechanische Angriffe (Steinschlagschutzfunktion) bietet, andererseits die rauhe Oberfläche der Rohkarosserie für die nachfolgende Decklackierung glättet, kleinere Unebenheiten ausfüllt und die elektrophoretisch abgeschiedene Schicht (KTL-Schicht) vor der natürlichen UV-Strahlung schützt. Diese Schicht wird größtenteils durch Applikation eines Einbrennlackes, beispielsweise mit elektrostatischen Hochrotationsglocken und anschließendem Einbrennvorgang bei Temperaturen über 130 °C erzeugt.
Die dritte, auf der Primerschicht befindliche Schicht ist die sogenannte Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 µm. Meistens wird diese Schicht in zwei Verfahrensschritten aufgebracht, beispielsweise in einem ersten Schritt durch Auftragung mittels elektrostatischer Hochrotationsglocken, gefolgt von einem zweiten Auftrag mittels pneumatischer Zerstäubung. Diese Schicht wird anschließend mit Infrarotstrahlern und/oder durch Warmluftkonvektion zwischengetrocknet.
Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.). Die Schichtdicke liegt üblicherweise zwischen 30 und 50 µm.
Anschließend werden die Basislackschicht und die Klarlackschicht gemeinsam bei einer Temperatur zwischen 130 und 160 °C eingebrannt.

Ein wesentlicher Nachteil bei der Herstellung dieser Vierschichtlackierung ist, daß sie aufgrund der unterschiedlichen Auftragsverfahren anlagen- und damit kostenintensiv ist.
Darüber hinaus erscheint die Verwendung von Lacken für den Spritzauftrag aus umweltpolitischen Gesichtspunkten nicht mehr sinnvoll, da bei der Lackierung erhebliche Mengen an Overspray anfallen.
Des weiteren sind aufgrund der Karosserieform Farbtonunterschiede und unterschiedliche Decklackstände zu beobachten, die zusammen bei dem zuvor beschriebenem Mehrschichtsystem nicht zu verhindern sind.

Es ist daher ein Bestreben der Automobilindustrie, Teile des zu lackierenden Blechkleides der Rohkarosserie, wie z.B. Motorhaube, Heckklappe, Türen etc. durch bereits fertig, in Wagenfarbe lackierte Teile zu ersetzen, um die zuvor beschriebenen Nachteile zu minimieren.

Eine wesentliche Voraussetzung für dieses Verfahren ist der Einsatz von sogenannten "pre-coated coils". Hierbei handelt es sich um in Wagenfarbe vorbeschichtete Metallbänder, die in lackiertem Zustand durch entsprechende Formgebungsverfahren (Tiefziehen) vom Automobilhersteller in die gewünschte Form gebracht werden können. Eine weitere Lackierung ist somit nicht mehr erforderlich.

Ein wesentlicher Nachteil der bisher verwendeten "pre-coated coils" ist, daß der Lackaufbau schon vor der Formgebung in bezug auf Glanz und Optik (appearance) nicht den von der Automobilindustrie geforderten Eigenschaften entsprechen.
Zudem war es nicht möglich, die von der Automobilindustrie geforderten Farbtöne nachzustellen. Insbesondere bei Effektlackierungen konnte bei Verwendung vorbeschichteter Coils nicht die Ausbildung der mit bloßem Auge sichtbaren Walzenstrukturen verhindert werden. Zudem war die Effektausbildung (Flop-Effekt) der Serienlackierung nicht nachstellbar.
Dies sind die Hauptgründe, warum in Wagenfarbe vorbeschichtete Coils nicht für die Serienfertigung von Automobilen verwendet werden.

Neuste Entwicklungen in der Automobilindustrie gehen immer mehr in Richtung Modulbauweise, wobei der Automobilhersteller die bei Fremdfirmen gefertigten Module nur noch an das Auto anbringt.
Unter den Begriff "Modul" werden solche Teile des Automobils verstanden, die von einem Zulieferer für den Automobilhersteller vorgefertigt werden und für sich genommen vollständig funktionsfähig sind. Beispiele hierfür sind einbaufertige Sitze, vollständig verschaltete Armaturenbretter etc.

Aufgrund der verfügbaren Lacktechnologie ist es bisher nicht möglich, in Wagenfarbe vorlackierte Karosserieteile oder Außenhautmodule anzubieten.

Ferner ist bekannt, in Beschichtungszusammensetzungen fluorhaltige Verbindungen einzusetzen.
So ist in der US 5 948 851 ein 2K-System beschrieben, welches nur bei niedrigen Temperaturen vemetzt wird. Hierzu wird als Bindemittel eine Mischung aus einem Acrylpolymer mit einem speziellen, fluorhaltigen Polyester mit einem gewichtsmittleren Molekulargewicht von weniger als 15.000 sowie freie Polyisocyanate als Vemetzer offenbart.
Diese Mischung wird als Klarlack auf einen Basislack nass-in-nass aufgebracht und bei 83 °C gemeinsam eingebrannt.

Des weiteren ist in der US 5 169 915 ein fluorhaltiges Copolymer bekannt, was ebenfalls in Mischung mit freien Isocyanaten zu schnell, bereits bei Raumtemperatur vemetzenden Lacken verwendet wird.

Darüber hinaus ist aus der US 5 929 158 die Herstellung eines fluorhaltigen Copolymerisats bekannt, welches durch radikalische Polymerisation eines Acrylmonomers in einem in Lösung befindlichen Fluorpolymer erhältlich ist.

Solche aus der Lackierung von Automobilrohkarosserien bekannte 2K-Lacke eignen sich aber nicht zur Herstellung von Coil-Coating Lacken, die bei hohen Temperaturen eingebrannt werden.
Vielmehr ist eine Vernetzung dieser Lacke aufgrund der zu geringen Topfzeit bereits in den Beschichtungsanlagen (Coatern) zu beobachten.

Aufgabe der vorliegenden Erfindung ist die Bereitstellung einer Beschichtungszusammensetzung, die sich für die Herstellung vorbeschichteter Metallbänder eignet, aus denen durch entsprechende Formgebungsverfahren (Tiefziehen) Teile für Automobile gefertigt werden.
Hierbei soll sich diese Beschichtungszusammensetzung insbesondere zur Herstellung von in Wagenfarbe vorlackierten Coils eignen, die in bezug auf Glanz und Optik (appearance) den von der Automobilindustrie geforderten Eigenschaften entsprechen.

Diese Aufgabe wird gelöst durch eine Beschichtungszusammensetzung, erhältlich durch Polyaddition einer nicht-wässrigen Ausgangsmischung, enthaltend:
(1) 10 bis 70 Gew.-% einer nicht-wässrigen Lösung eines Polymers auf Acrylatbasis mit einer OH-Zahl zwischen 100 und 250;
(2) 10 bis 70 Gew.-% einer nicht-wässrigen Lösung eines fluormodifizierten Polymers mit einer Glasübergangstemperatur zwischen 20 und 40 °C; und
(3) 20 bis 60 Gew.-% mindestens eines blockierten aliphatischen oder cycloaliphatischen Polyisocyanats;

wobei das Gewichtsverhältnis von Komponente (1) zu Komponente (2) höchstens 1 beträgt und die Summe der Komponenten (1), (2) und (3) 100 % beträgt, bezogen auf den Bindemittelgehalt der zu vernetzenden Ausgangsmischung.

Mit der erfindungsgemäßen Beschichtungszusammensetzung ist es erstmals möglich, in Wagenfarbe vorbeschichtete Metallbänder (Coils) bereitzustellen, die zur Herstellung von Karosserieaußenhautteilen oder entsprechenden Modulen verwendet werden können, welche in Optik und Farbton den Ansprüchen der Automobilindustrie genügen.
Des weiteren erfüllt die erfindungsgemäße Beschichtungszusammensetzung auch die übrigen Anforderungen an einen Automobilserienlack, wie z.B. an die mechanische Belastbarkeit.

Sehr gute Ergebnisse in bezug auf Glanz werden mit einer solchen erfindungsgemäßen Beschichtungszusammensetzung erhalten, bei der die Komponente (1) erhältlich ist durch radikalische Polymerisation einer Monomerenmischung, die folgende Komponenten enthält:
(i) 30 bis 60 Gew.-% mindestens einer polycycloaliphatischen Verbindung mit mindestens 2 Cyclen und einem Brechungsindex bei 20 °C von mindestens 1,460;
(ii) 25 bis 70 Gew.-% mindestens eines C₂-C₄-Hydroxyalkylacrylats und/oder C₂-C₄-Hydroxyalkyl(meth)acrylats mit primären Hydroxylgruppen;
(iii) 0,1 bis 1 Gew.-% Acrylsäure;

wobei die Summe der Komponenten (1), (2) und (3) 100 Gew.-%, bezogen auf das Monomerengemisch, beträgt.
Bei Verwendung dieser speziellen nicht-wässrigen Lösung eines Polymers auf Acrylatbasis verschlechtern sich die übrigen Eigenschaften eines durch Vernetzung einer entsprechenden Beschichtungszusammensetzung erhaltenen Lackfilms nicht; insbesondere seine mechanischen Eigenschaften (Steinschlagbeständigkeit, Härte und Flexibilität) und seine Chemikalienbeständigkeit entsprechen den hohen Anforderungen der Automobilindustrie in bezug auf einen Klarlack.

Unter einem eine Carboxylgruppe enthaltenden polycycloaliphatischen Stoff wird in der vorliegenden Erfindung ein Stoff oder eine Verbindung verstanden, der eine polycarbocyclische Struktur oder Teilstruktur aufweist, d.h., daß die Cyclen nur Carbocyclen sind.

Die Bezeichnung (Meth) bzw. (meth) in (meth)acryl- bedeutet hier wie auch im weiteren, daß sowohl die Methacryl- als auch die Acrylverbindungen umfaßt sind.

Hinsichtlich des Zusammenhangs zwischen Brechungsindex und Glanz sei auf den Artikel von Juergen H. Braun in JOURNAL OF COATINGS TECHNOLOGY, Vol. 63, No. 799, August 1991 verwiesen.
In bezug auf den Zusammenhang von Brechungsindex und Temperatur wird auf das Organikum, Autorenkollektiv VEB Deutscher Verlag der Wissenschaften, 16. Auflage, Berlin 1986, S. 76 f. verwiesen.

Für Stoffe, die bei 20 °C nicht flüssig sind, kann der Brechungsindex bei erhöhter Temperatur mittels thermostatisiertem Abbé-Refraktometer mit dem Licht der Natrium-D-Linie λ = 589 nm bestimmt werden. Als Inkrement für die Temperaturkorrektur gilt: Addition von 5 · 10⁻⁴ Einheiten pro °C

Die radikalische Polymerisation der Komponente (1) ist ein gängiges, dem Fachmann geläufiges Verfahren.

Die in der Beschichtungszusammensetzung verwendete Monomerenmischung kann zusätzlich 5 bis 25 Gew.-% eines Vinylesters einer verzweigten Monocarbonsäure mit durchschnittlich 9 Kohlenstoffatomen enthält.
Solche Vinylester sind übliche Handelsprodukte und beispielsweise unter der Handelsbezeichnung VeoVa 9 von der Fa. Shell erhältlich.
Die Verwendung solcher Vinylester ist dann von Vorteil, wenn hohe Anforderungen an die Härte und die Chemikalienbeständigkeit gestellt werden.

Besonders gute Ergebnisse werden erzielt, wenn als polycycloaliphatische Verbindung Isobornylmethacrylat verwendet wird.

Die aus einer so erhältlichen Beschichtungszusammensetzung resultierenden Lackfilme haben ausgezeichnete Eigenschaften hinsichtlich Glanz und Chemikalienbeständigkeit.

Ebenfalls sehr gute Ergebnisse sind zu beobachten, wenn die polycycloaliphatische Verbindung der Komponente (i) ausgewählt ist aus einem Acrylcopolymerisat, das durch Modifizierung eines mindestens eine Epoxygruppe aufweisenden Acrylcopolymerisats durch einen eine Carboxylgruppe enthaltenden polycycloaliphatischen Stoff mit mindestens 2 Cyclen mit einem Brechungsindex bei 20 °C von mindestens 1,460 erhältlich ist, wobei die Epoxygruppe aus Glycidylmethacrylat stammt.
Diese spezielle polycycloaliphatische Verbindung der Komponente (i) kann alleine oder in Mischung mit anderen polycycloaliphatischen Verbindungen zur Herstellung einer nicht-wässrigen Lösung eines Polymers auf Acrylatbasis verwendet werden.
Bevorzugt ist die Verwendung einer solchen, einen Glycidylmethacrylatrest aufweisenden polycycloaliphatischen Verbindung in Mischung mit Isobornylmethacrylat.

In einer weiteren erfindungsgemäßen Ausführungsform liegt das Molverhältnis von Carboxylgruppe zu Epoxidgruppe zwischen 0,5 bis 1,0, vorzugsweise zwischen 0,8 und 1,0 besonders bevorzugt zwischen 0,9 und 1,0. Der eine Carboxylgruppe enthaltende polycycloaliphatische Stoff kann beispielsweise aber auch ein Reaktionsprodukt aus mindestens zwei Verbindungen sein; insbesondere handelt es sich bei der Komponente (i) um eine der zuvor genannten polycycloaliphatischen Verbindungen, die bei erhöhter Temperatur zusätzlich mit Polycarbonsäuren und/oder deren Anhydriden unter Halbesterbildung weiter umgesetzt worden ist.

Der eine Carboxylgruppe enthaltende Stoff kann in einer weiteren, erfindungsgemäßen Ausführungsweise einen Brechungsindex bei 20 °C von mindestens 1,480 haben.
Auf diese Weise können noch weitere Verbesserungen hinsichtlich des Glanzes der vemetzten Beschichtungszusammensetzung erhalten werden, ohne daß sich die anderen Eigenschaften verschlechtern.

Besonders geeignete polycycloaliphatische Verbindungen können tricycloaliphatische Monocarbonsäuren aus der Gruppe von hydrierten Naturharzsäuren, z.B. Handelsprodukte wie "Foral AX-E" von der Firma Hercules BV; Adamantancarbonsäuren; und tricyclischen Monocarbonsäuren, die sich vom Dicyclopentadien ableiten, wie z.B. Tricyclodecan-Derivate mit einer Carboxylgruppe (TCD-Carbonsäuren), insbesondere Tricyclo[5.2.1.0.^{2,6}]-decan-8-carbonsäure; vorzugsweise Tetrahydroabietinsäure, sein.

Der eine Carboxylgruppe enthaltende polycycloaliphatische Stoff kann in einer weiteren, bevorzugten Ausführungsform der Erfindung ein Reaktionsprodukt aus mindestens zwei Verbindungen sein, von denen mindestens eine eine polycycloaliphatische Verbindung mit einen Brechungsindex bei 20 °C von mindestens 1,460, vorzugsweise von mindestens 1,480, ist.
Insbesondere kann mindestens eine der polycycloaliphatischen Verbindungen, die einen Brechungsindex bei 20 °C von mindestens 1,460 bzw. 1,480 hat, mindestens zu 10 Gew.-%, vorzugsweise mindestens zu 20 Gew.-%, und insbesondere mindestens zu 50 Gew.-%, in dem eine Carboxylgruppe enthaltenden Reaktionsprodukt enthalten sein.

Als polycycloaliphatische Verbindung eignet sich besonders ein tricycloaliphatischer Monoalkohol aus der Gruppe der perhydrierten Naturharze wie Perhydroabietylalkohol; der Dicydopentadien-Derivate, wie beispielsweise 8-Hydroxytricyclo[5.2.1.0^{2,6}]decan, 8-Hydroxymethyltricyclo[5.2.1.0^{2,6}]-decan, 8-Hydroxytricyclo[5.2.1.0^{2,6}]dec-3-en, 9-Hydroxytricyclo-[5.2.1.0^{2,6}]dec-3-en.
Dieser Monoalkohol reagiert während der Herstellung des eine Carboxylgruppe enthaltenden polycycloaliphatischen Stoffes mit einer Carboxylgruppe enthaltenden Verbindung unter Halbesterbildung.
Hierfür geeignete, eine Carboxylgruppe enthaltende Verbindungen sind insbesondere Dicarbonsäuren oder deren Anhydrid(e), beispielsweise solche aus der Gruppe von Bernsteinsäure(anhydrid), Glutarsäure(anhydrid), Chinolindicarbonsäure(anhydrid), Furandicarbonsäure(anhydrid), Pyridindicarbonsäure(anhydrid), Phthalsäure(anhydrid), Hexahydrophthalsäure(anhydrid), Tetrahydrophthalsäure(anhydrid), Methylhexahydrophthalsäure(anhydrid), Naphthalindicarbonsäure(anhydrid) und Maleinsäure(anhydrid) ausgewählt sein.

Die Bezeichnung "(anhydrid)" bedeutet hier und im folgenden, daß sowohl die freie Säure als auch deren Anhydrid gemeint ist.

Sofern als Ausgangsstoff für das Reaktionsprodukt die polycycloaliphatische Verbindung eine polycycloaliphatische Dicarbonsäure oder deren mögliche Anhydrid(e) ist, wie beispielsweise solchen aus der Gruppe von hydrierten Naturharzsäuren; Adamantancarbonsäuren; und tricyclischen Monocarbonsäuren, die sich vom Dicyclopentadien ableiten, wie z.B. Tricyclo-[5.2.1.0.^{2,6}]decan-8-carbonsäure; vorzugsweise Tetrahydroabietinsäure, kann der Alkohol auch ein aliphatischer einwertiger Alkohol, z.B. Methanol, Ethanol, n-Propanol, Isopropanol, Methoxypropanol, n-Butanol, Isobutanol, 2-Ethyl-1-hexanol, 1-Hexanol, ein Heptylalkohol, ein Nonylalkohol; ein Fettalkohol, z.B. Octanol, Decanol, Dodecanol; ein Glycolmonoether, z.B. Methylglycol, Ethylglycol, Butylglycol, Polyglycolmonoether; ein aromatischer einwertiger Alkohol, z.B. Benzylalkohol; oder ein cycloaliphatischer einwertiger Alkohol, z.B. Cyclohexanol, Cyclododecanol und/oder Cyclopentanol sein.
Auch hier handelt es sich bei dem Reaktionsprodukt um einen Halbester, der anschließend mit der aus dem Glycidylmethacrylat stammenden Epoxygruppe polymerisiert.

Der eine Carboxylgruppe enthaltende polycycloaliphatische Stoff kann aber zusätzlich auch eine oder mehrere aromatische Verbindungen enthalten.
Diese Möglichkeit wird dann gewählt, wenn der Glanz der fertigen Beschichtungszusammensetzung noch weiter erhöht werden soll.
Eine solche aromatische Verbindung kann vorzugsweise stammen aus der Gruppe der aromatischen Monocarbonsäuren wie Naphthoesäure; Benzolmonocarbonsäuren wie Benzoesäure, o-Toluylsäure, m-Toluylsäure, p-Toluylsäure, Hydroxybenzoesäure, tert.-Butylbenzoesäure; aromatischen heterocyclischen Monocarbonsäuren wie Pyridincarbonsäuren und Furancarbonsäuren.

Gemäß einer besonders bevorzugten Ausführungsform ist das C₂-C₄₋Hydroxyalkyl(meth)acrylat ausgewählt aus 2-Hydroxyethyl(meth)acrylat und 4-Hydroxybutyl(meth)acrylat.

Sehr gute Ergebnisse werden mit 2-Hydroxyethylmethacrylat und 4-Hydroxybutylacrylat erzielt.

Die Erfindung ist aber nicht auf die Verwendung von C₂-C₄-Hydroxyalkyl(-meth)acrylaten mit primären Hydroxylgruppen beschränkt. Ebenso ist es möglich, C₂-C₄-Hydroxyalkyl(meth)acrylate zu verwenden, bei denen bis zu 50 % der primären Hydroxylgruppen durch sekundäre Hydroxylgruppen ersetzt sind.
Beispiele für C₂-C₄-Hydroxyalkyl(meth)acrylate mit sekundären Hydroxylgruppen sind 2-Hydroxypropyl(meth)acrylat, 2-Hydroxybutyl(meth)acrylat und Hexandiol-1,6-mono(meth)acrylat.

Als fluormodifiziertes Polymer eignen sich alle Verbindungen, die unter Reaktionsbedingungen in Lösung, und nicht in Form einer Dispersion, vorliegen. Beispiele für besonders geeignete fluormodifizierte Polymere sind solche auf Basis fluorhaltiger Vinylether mit einem Fluorgehalt zwischen 25 und 30 %, einer Glasübergangstemperatur zwischen 16 und 45 °C und einer Hydroxylzahl zwischen 45 und 90. Solche Polymere sind handelsüblich und werden beispielsweise unter der Bezeichnung "Lumiflon®" von der Fa. Zeneca Resins vertrieben.

Der eine Carboxylgruppe enthaltende polycycloaliphatische Stoff kann zusätzlich auch eine oder mehrere aromatische Verbindungen enthalten, vorzugsweise aus der Gruppe aromatischer Monocarbonsäuren wie Naphthoesäure; Benzolmonocarbonsäuren wie Benzoesäure, o-Toluylsäure, m-Toluylsäure, p-Toluylsäure, Hydroxybenzoesäure, tert.-Butylbenzoesäure; aromatischen heterocyclischen Monocarbonsäuren wie Pyridincarbonsäuren und Furancarbonsäuren.

Werden hohe Anforderungen an die Witterungsbeständigkeit der Beschichtungszusammensetzung gestellt, so werden keine aromatischen oder heterocyclischen Monocarbonsäuren mitverwendet oder die Gesamtmenge an aromatischen Ringen, einschließlich von Vinylaromaten, z.B. Styrol, beträgt nicht mehr als 30 Gew.-%, bezogen auf die Beschichtungszusammensetzung.

Die Komponente (i) kann erhalten werden durch Umsetzung der Ausgangsverbindungen bei erhöhter Temperatur, z.B. 60 bis 200 °C, vorzugsweise 120 bis 170 °C. Die Umsetzung kann in der Schmelze oder in Gegenwart von organischen Lösungsmitteln durchgeführt werden, wie sie üblicherweise bei der Lack- bzw. Lackkunstharzherstellung verwendet werden, z.B. Alkoholen, z.B. Methoxypropanol, Butanol, aromatischen Kohlenwasserstoffen, z.B. Xylol, Erdöldestillaten auf der Basis von Alkylbenzolen, Estern, z.B. Butylacetat, Methoxypropylacetat, Ketonen, z.B. Butanon, Methylisobutylketon, bzw. deren Gemischen. Dabei können gegebenenfalls übliche Katalysatoren für die Katalysierung der Epoxy/Carboxy-Reaktion, z.B. Alkalimetallhydroxide, z.B. Lithiumhydroxidmonohydrat, tertiäre Amine, z.B. Triethylamin, N,N-Benzylmethylamin, Triethylbenzylammoniumchlorid, Benzyltrimethylammoniumhydroxid, auch Gemische verschiedener Katalysatoren, im allgemeinen in einer Menge von 0,1 bis 2 Gew.-%, bezogen auf die Gesamtmenge der Komponenten, eingesetzt werden. Werden die Umsetzungen bei höherer Temperatur, z.B. 150 bis 170 °C, durchgeführt, kann im allgemeinen auf Katalysatoren verzichtet werden. Die beanspruchten Modifizierungsmittel können dem epoxidgruppenhaltigen Acrylcopolymerisat bereits vor der Umsetzungstemperatur zugefügt oder bei der Umsetzungstemperatur portionsweise nach und nach oder kontinuierlich unter Berücksichtigung der exothermen Reaktion zugefügt werden, auch in Form von Lösungen, z.B. in organischen Lösungsmitteln, soweit Löslichkeit oder stabile Dispergierbarkeit darin besteht.
Die Menge des eine Carboxylgruppe enthaltenden polycycloaliphatischen Stoffs wird, wie bereits ausgeführt, so gewählt, daß das Verhältnis der Epoxygruppen zu Carboxylgruppen üblicherweise 1:0,5 bis 1:1 beträgt und richtet sich vor allem nach dem Verwendungszweck bzw. der Anwendung der Beschichtungszusammensetzung.
Die Umsetzung wird im allgemeinen beendet, sobald die Säurezahl unter 20 gefallen ist und vorzugsweise 0 bis 10 beträgt; es können jedoch auch solche Acrylcopolymerisate mit höherer Säurezahl, z.B. 25 bis 50, hergestellt werden.

Das zahlenmittlere Durchschnittsmolekulargewicht der Komponente (i) kann innerhalb weiter Grenzen schwanken und liegt vorzugsweise zwischen 500 und 10.000, besonders bevorzugt zwischen 700 und 5.000, insbesondere zwischen 750 und 2.000 (g/mol).
Die Säurezahl liegt zwischen 0 und 50, vorzugsweise zwischen 5 und 25 (mg KOH/g Harz).

Als Vernetzungsmittel können prinzipiell alle blockierten Polyisocyanate benutzt werden, bei denen die Isocyanatgruppen mit einer Verbindung umgesetzt worden sind, so daß das gebildete blockierte Polyisocyanat gegenüber den Hydroxylgruppen des Polymers bei Raumtemperaturen beständig ist, bei erhöhten Temperaturen aber reagiert, in der Regel im Bereich von etwa 90 bis 300 °C. Bei der Herstellung der blockierten Polyisocyanate können beliebige, für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele von geeigneten Diisocyanaten sind die oben genannten Diisocyanate.
Es können auch Polyisocyanate von höherer Isocyanatfunktionalität verwendet werden. Beispiele dafür sind Tris-(4-isocyanatophenyl)methan, 1,3,5-Triisocyanatobenzol, 2,4,6-Triisocyanatotoluol, 1,3,5-Tris-(6-isocyanatohexyl)biuret, Bis-(2,5-diisocyanato-4-methylphenyl)methan und polymere Polyisocyanate, wie Dimere und Trimere von Diisocyanatotoluol. Ferner kann man auch Mischungen von Polyisocyanaten benutzen.
Die bei der Erfindung als Vernetzungsmittel in Betracht kommenden organischen Polyisocyanate können auch Präpolymere sein, die sich beispielsweise von einem Polyol, einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen. Beispiele von Polyolen, die hierfür verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether wie Diethylenglykol und Dipropylenglykol sowie Polyether, die Addukte aus solchen Polyolen und Alkylenoxiden sind. Beispiele von Alkylenoxiden, die sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxyethylenglykol mit einem Molekulargewicht von 1.540, Polyoxypropylenglykol mit einem Molekulargewicht von 1.025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerin, Trimethylolethan, Trimethylolpropan, 1,2,6-Hexantriol, Dipentaerythrit, Tripentaerythrit, Polypentaerythrit, Methylglucosiden und Saccharose mit Alkylenoxiden wie Ethylenoxid, Propylenoxid oder Mischungen davon.
Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.
Andere geeignete Blockierungsmittel sind Oxime, wie Methylethylketonoxim, Acetonoxim und Cyclohexanonoxim sowie auch Caprolactame, Phenole und Hydroxamsäureester. Bevorzugte Blockierungsmittel sind Malonester, Acetessigester und β-Diketone.
Besonders bevorzugt sind Methylethylketoxim und Caprolactam.
Die blockierten Polyisocyanate werden hergestellt, indem man das Verkappungsmittel in ausreichender Menge mit dem organischen Polyisocyanat umsetzt, so daß keine freien Isocyanatgruppen mehr vorhanden sind.

Das blockierte aliphatische oder cycloaliphatische Polyisocyanat ist vorzugsweise ein blockiertes, in trimerisierter oder Biuretform vorliegendes Isophorondiisocyanat (IPDI, 3,5,5-Trimethyl-1-isocyanato-3-isocyanatomethylcyclohexan) und/oder 2,4,6-Trioxo-1,3,5-tris(6-isocyanatohexyl)hexahydro-1,3,5-triazin (Desmodur® N3300).

Es können aber auch weitere, geeignete Polyisocyanate verwendet werden, beispielsweise 1,3-Bis(1-isocyanato-1-methylethyl)benzol (TMXDI, m-Tetramethylxylylendiisocyanat) oder 4,4'-Dicyclohexylmethandiisocyanat (Desmodur® W).
Letztere Polyisocyanate müssen noch mit geeigneten Blockierungsmitteln umgesetzt werden.
Die Wahl des geeigneten Blockierungsmittels ist dabei abhängig von den Vernetzungstemperaturen. Bei der Verwendung der erfindungsgemäßen Beschichtungszusammensetzung als Coil-Coating-Lack wird als Blockierungsmittel zumeist Methylethylketoxim oder Caprolactam gewählt.

Es gibt aber auch handelsübliche, blockierte Polyisocyanate, wie sie beispielsweise von der Fa. Bayer unter der Bezeichnung Desmodur® BL 3175 angeboten werden.

Die zuvor genannte Beschichtungszusammensetzung enthält neben den zwingenden Komponenten zusätzlich die üblicherweise bei der Lösungspolymerisation von Acrylcopolymerisaten und bei der Herstellung von Einbrennlacken eingesetzten Lösungsmittel, z.B. aromatische Kohlenwasserstoffe, z.B. Xylol, Ester, z.B. Methoxypropylacetat, Ketone, z.B. Butanon, Methylisobutylketon, Alkohole, z.B. Butanol, Methoxypropanol, Glycolmonoether, z.B. Butylglycol, bzw. deren Mischungen, z.B. Mischungen aus überwiegend aromatischen Erdöldestillat-Lösungsmitteln mit höherem Siedepunkt und Butanol, und lassen sich mit diesen Lösungsmitteln bzw. Lösungsmittelmischungen auf Anwendungsviskosität verdünnen.

Das erfindungsgemäße Beschichtungsmittel kann gegebenenfalls zusätzlich die zur Lackherstellung üblichen Zusatz- und Hilfsstoffe enthalten, wie z.B.:
- oberflächenaktive Mittel, z.B. Netz- und Verlaufmittel auf Siliconbasis, z.B. polyethermodifizierte Dimethylpolysiloxan-Copolymere, Fluortenside;
- Rheologie-Hilfsmittel, z.B. Antiablaufmittel (SCA-modifizierte Acrylcopolymere; SCA = Sagging Control Agents);
- Verdickungs- oder Thixotropierungsmittel, z.B. hochdisperse Kieselsäure, Polyurethane, hochviskose Acrylcopolymerisate mit Acryl- und/oder Methacrylsäure als hauptsächlich wirksamen copolymerisierten Bestandteil; Säurekatalysatoren, z.B. Phosphorsäure, saure Teilester von Phosphorsäure mit ein- oder zweiwertigen Alkoholen, z.B. Phosphorsäuremonobutylester, Halbester von Dicarbonsäuren bzw. deren Anhydriden mit einwertigen Alkoholen, z.B. Maleinsäuremonobutylester, Lösungen von Polysäuren in organischen geeigneten Lösungsmitteln, z.B. 20 %ige Lösungen von Maleinsäure in Methoxypropanol;
- Beschleuniger, z.B. tertiäre Amine, z.B. Triethylamin, Dibutylzinndioxid, Dibutylzinndilaurat, Metallalkoholate, z.B. Aluminiumisopropylat, Butyltitanat, Metallchelate von Aluminium, Zirkon oder Titan z.B. Titanylacetylacetonat;
- Lichtschutzmittel, z.B. Benztriazol-Derivate und HALS-Verbindungen (HALS - Hindered Amine Light Stabilizer);
- zusätzliche Vernetzungsmittel, insbesondere
   - carboxyfunktionelle Komponenten, vorzugsweise Polycarbonsäuren oder deren Anhydride, z.B. Itaconsäure, Citraconsäureanhydrid, Dodecandisäure, 2-Dodecendisäure, Dodecenylbernsteinsäureanhydrid, Phthalsäureanhydrid, Tetrahydrophthalsäureanhydrid, Trimellithsäureanhydrid, 1,2-, 1,3- und 1,4-Cyclohexandicarbonsäure, Hexahydrophthalsäureanhydrid, bzw. deren Gemische, wie sie üblicherweise zur Härtung von Polyepoxiden, z.B. Diepoxiden auf der Basis von Bisphenol A, cycloaliphatischen Diepoxiden, z.B. Hexahydrophthalsäurediglycidylester, 3,4-Epoxycyclohexylmethyl-3',4'-epoxycyclohexancarboxylat, epoxidgruppenhaltigen Acrylcopolymerisaten mit mehr als einer, vorzugsweise zwei oder mehr, Epoxidgruppen pro Durchschnittsmolekulargewicht eingesetzt werden oder auch Polysäuren, die durch Umsetzung eines Polyols, z.B. 1,6-Hexandiol, Trimethylolpropan, mit einem Säureanhydrid, z.B. Hexahydrophthalsäureanhydrid, Methylhexahydrophthalsäureanhydrid, gebildete Halbester sind, wie sie beispielsweise in der EP-A-212 457 beschrieben sind, und carboxyfunktionelle Acrylcopolymerisate, z.B. hergestellt durch den Einsatz erheblicher Mengen von (Meth)Acrylsäure bei der Herstellung von Acrylcopolymerisaten, z.B. mit einer Säurezahl von 70 oder höher, sowie Anhydrid-Acrylcopolymerisate, z.B. hergestellt durch den Einsatz von Maleinsäureanydrid und/oder Itaconsäure bei der Herstellung von Acrylcopolymerisaten, wie sie z.B. in der EP-A-358 306, EP-A-316 873 beschrieben sind sowie carboxylgruppenhaltige ungesättigte oder gesättigte Polyester, insbesondere mit höherer Säurezahl, z.B. 70 oder höher; und/oder
   - Aminoplaste, die mit den modifizierten Acrylcopolymerisaten lacktechnisch einwandfrei verträglich sind; vorzugsweise ganz oder teilweise mit einwertigen Alkoholen, insbesondere C₁-C₄-Alkoholen, veretherte Aminoplaste, z.B. Harnstoff- und/oder Triazin-Formaldehydharze, insbesondere Melamin-Formaldehydharze, Benzoguanaminharze, z.B. Tetramethoxybenzoguanamin, Triazin-Formaldehydharze, hergestellt gemäß DE-OS 42 37 515, z.B. durch Umsetzung von 2,4-Diamino-6-diethylaminotriazin, Paraformaldehyd und Butanol, Hexamethoxymethylmelamin, Hexamethylbutoxymethylmelamin, Tetramethoxymethylglycoluril; insbesondere carboxylgruppenhaltige Derivate von ganz oder teilweise veretherten Aminoplasten, wie sie z.B. in der DE-OS 35 37 855, US-A-3 519 627, US-A-3 502 557 und US-A-4 026 855 beschrieben sind; oder die in der einschlägigen Literatur (Karsten, Lackrohstofftabellen, 9. Aufl., Curt R. Vincentz Verlag, Hannover 1992, S.269-288; European Resin Directory 1993, European Resin Manufacturers Association, S. 101-108) genannten Aminoplaste; und/oder
   - TACT (Tris(alkoxycarbonylamino)-1,3,5-triazine) wie Tris(methoxycarbonylamino)-1,3,5-triazin, Tris(butoxycarbonylamino)-1,3,5-triazin oder Mischungen hiervon.
- weitere Bindemittelkomponenten, vorzugsweise Harze, die mit der erfindungsgemäßen Beschichtungszusammensetzung lacktechnisch einwandfrei verträglich sind, insbesondere carboxyl- und hydroxylgruppenhaltige Acrylcopolymerisate und/oder carboxyl- und hydroxylgruppenhaltige gesättigte oder ungesättigte Polyester in untergeordneten Mengen (1 bis 30 Gew.-%), bezogen auf Festbindemittel.

Der Festkörpergehalt dieser Beschichtungszusammensetzung beträgt in anwendungstechnischer Form vorzugsweise mindestens 45 Gew.-%, insbesondere 50 Gew.-% oder mehr.

Besonders bevorzugt ist die Verwendung der erfindungsgemäßen Beschichtungszusammensetzung als nichtwäßriger bzw. lösungsmittelverdünnbarer Klarlack bzw. lasierender Decklack, insbesondere in der Automobilindustrie.

Die Beschichtungszusammensetzung kann insbesondere zur Lackierung vorbeschichteter Metallbänder (Coil-Coating) verwendet werden. Der Auftrag der Beschichtungszusammensetzung erfolgt dabei durch die dem Fachmann bekannten Beschichtungsverfahren. Besonders geeignete Verfahren sind hierbei das Walzverfahren und das Gießkopfverfahren.

Hinsichtlich der Verwendung der Beschichtungszusammensetzung als Klarlack zur Herstellung vorbeschichteter Metallbänder wird die erfindungsgemäße Beschichtungszusammensetzung in einer Mehrschichtlackierung verwendet. Eine solche für die Automobilindustrie geeignete Mehrschichtlackierung ist beispielsweise wie folgt erhältlich:
- Aufbringen einer Primerschicht auf einem vorbehandelten metallischen Substrat und Einbrennen derselben bei einer Temperatur zwischen 180 - 260 °C;
- Aufbringen einer farbgebenden Basislackschicht und Einbrennen derselben bei einer Temperatur zwischen 180 - 260 °C;
- Aufbringen einer Beschichtungszusammensetzung nach einem der Ansprüche 1 bis 19 und Einbrennen derselben bei einer Temperatur zwischen 180 - 260 °C.

Die für die Herstellung einer Primer- und Basislackschicht in der zuvor genannten Mehrschichtlackierung verwendbaren Beschichtungsmittel sind handelsüblich und beispielsweise unter der Bezeichnung Polycoat® CC-Primer von der Fa. Bollig & Kemper erhältlich.
Die Schichtdicken einer solchen Mehrschichtlackierung, d.h. die Dicke der Primer-, Basislack- und der aus der Beschichtungszusammensetzung erhältlichen Klarlackschicht in vernetztem Zustand liegen jeweils zwischen 10 und 25 µm.
Durch Auftrag der einzelnen Schicht durch das sogenannte "Coil-Coating"-Verfahren werden sehr gleichmäßige Schichtdicken erhalten. Daraus ergibt sich bei Verwendung effektpigmenthaltiger Basislacke ein besonders gleichmäßig zu beobachtender Effekt, der bisher durch Spritzauftrag eine Basislacks nicht zu erreichen war - die beim Spritzauftrag unvermeidlichen, geringen Unterschiede in der Schichtdicke zeigen sich in einem visuell deutlich wahrzunehmenden Effektunterschied.

Die vorliegende Beschichtungszusammensetzung eignet sich besonders bevorzugt zur Herstellung von Automobilteilen durch Tiefziehen der in Wagenfarbe vorbeschichteten Metallbänder. Denn die erfindungsgemäße Beschichtungszusammensetzung zeichnet sich besonders durch ausgezeichnete Tiefzieheigenschaften aus, ohne daß das Gesamteigenschaftsniveau der vemetzten Beschichtung negativ beeinflußt wird.
Diese Möglichkeit eröffnet neue Anwendungsgebiete für die Automobilhersteller, insbesondere neue Möglichkeiten auf dem Gebiet der Coloristik.

Die folgenden Beispiele dienen der Erläuterung der Erfindung:

### BEISPIELE:

### Herstellung eines erfindungsgemäßen, cycloaliphatischen Acrylatpolymeren

In einem 2-Liter-Vierhals-Rundkolben, ausgestattet mit Heizvorrichtung, Thermometer, Rührer, Kühlaufsatz und Gaseinleitungsrohr werden 328,5 g Solvesso® 100, 87,6 g Veova® 9 und 5,8 g Cumolhydroperoxid (80 %ige Lieferform in Ketongemisch) vorgelegt. Unter Rühren und Durchleiten von Stickstoff wird auf 140 °C erhitzt und mittels Tropftrichter eine Mischung aus 284,5 g Isobornylmethacrylat, 206,3 g 2-Hydroxyethylmethacrylat, 2,3 g Acrylsäure, 43 g Ethyl-3,3-di-(tert.-amylperoxy)-butyrat und 14,0 g Solvesso® 100 innerhalb 4 Stunden gleichmäßig zudosiert. Eine Stunde nach Ende der Zugabe wird innerhalb von 30 Minuten eine Mischung aus 4 g Ehtly-3,3-di-(tert.-amylperoxy)-butyrat und 24,0 g Solvesso® 100 zugetropft. Nach weiteren 2 Stunden wird abgekühlt auf 80 °C und über ein 30 µm-Sieb filtriert. Das resultierende Harz hat eine Säurezahl von 4 mg KOH/g, Feststoffgehalt 60 % und eine Viskosität von 40 bis 60 Sekunden gemessen nach DIN 53211 im 4 mm-Becher bei 20 °C (50 %ig in Solvesso® 100).

### BEISPIEL

In einem 2 l Metall-Mischbehälter werden 360 g des zuvor beschriebenen Acrylcopolymerisats mit 140 g eines handelsüblichen Fluorpolymerharzes (Lumiflon® LF 552 von der Fa. Zeneca Resins, 60 %ige Lösung in aromatischen Lösemitteln) gemischt.
Anschließend werden 150 g eines handelsüblichen, mit Ketoxim geblockten aliphatischen Polyisocyanats (Desmodur® BL 3175 von der Fa. Bayer AG), 175 g eines handelsüblichen, geblockten cycloaliphatischen Polyisocyanats (Vestanat® B 1370 von der Fa. Creanova), 20 g eines UV-Absorbers auf Benztriazol-Basis (Tinuvin® 1130 von der Fa. Ciba-Geigy) 10 g einer HALS-Verbindung (Tinuvin® 292 von der Fa. Ciba Spezialitäten-Chemie), 3 g eines Verlaufmittels auf Acrylcopolymerisatbasis (Disparlon® L1984 von der Fa. Kusumoto Chemicals), 2 g Dibutylzinnlaurat und 40 g Butyldiglykolacetat zugegeben.
Durch Zugabe von 10,0 Gew.-Teilen Solvesso® 150 wird die Verarbeitungsviskosität von 80 Sekunden im DIN-Becher 4 mm bei 20 °C eingestellt.

### VERGLEICHSBEISPIEL

In einem 2 l Metall-Mischbehälter werden 700 g eines handelsüblichen Fluorpolymerharzes (Lumiflon® LF 552 von der Fa. Zeneca Resins, 60 %ige Lösung in aromatischen Lösemitteln) 150 g eines handelsüblichen, mit geblockten cycloaliphatischen Polyisocyanat (Vestanat® B 1370 von der Fa. Creanova), 15 g eines UV-Absorbers auf Benztriazol-Basis (Tinuvin® 1130 von der Fa. Ciba-Geigy) 8 g einer HALS-Verbindung (Tinuvin® 292 von der Fa. Ciba Spezialitäten-Chemie), 5 g eines Verlaufmittels auf Acrylcopolymerisatbasis (Disparlon® L1984 von der Fa. Kusumoto Chemicals) und 2 g Dibutylzinnlaurat gemischt.
Durch Zugabe von 119 g Solvesso® 150 wird die Verarbeitungsviskosität von 80 Sekunden im DIN-Becher 4 mm bei 20 °C eingestellt.

### Herstellung eines Basislacks

560 g eines handelsüblichen Polyesterharzes (Dynapol® LH 830 von der Fa. Degussa-Hüls AG, 60 %ig gelöst in Solvesso® 150) werden in einem 2 l Metall-Mischbehälter vorgelegt. Unter Zuhilfenahme eines geeigneten Dispergiergerätes (Dissolver von der Fa. Pendraulik) werden 5 g kolloidale Kieselsäure (Aerosil® R972 von der Fa. Degussa AG) langsam dispergiert. Die Zugabe von 90 g eines handelsüblichen geblockten aliphatischen Polyisocyanats (Desmodur® BL 3175 von der Fa. Bayer AG) erfolgt unter Rühren die Zugabe von 5 g eines Verlaufmittels auf Acrylcopolymerisatbasis (Disparlon® L1984 von der Fa. Kusumoto Chemicals) und 2 g Dibutylzinnlaurat (Reaktionsbeschleuniger) sowie 50 g Solvesso® 200S.
Danach werden 90 g Aluminiumeffektpigment (Alpate® 8160 von der Fa. Alcan Toyo) in 100 g Solvesso® 150 angeteigt und nach einer Stunde dem oben beschriebenen Gemisch zugesetzt.
Die Viskosität wird auf einen Wert zwischen 90 und 100 Sekunden (gemessen im DIN-Becher 4 mm bei 20 °C) mit ca. 9,8 Gew.-Teilen Solvesso® 150 eingestellt.

### HERSTELLUNG DER TESTBLECHE (Mehrschichtlackierung)

Als Substrate für die Applikation der erfindungsgemäßen Beschichtungszusammensetzung dienen in der Bandbeschichtungsindustrie übliche, chromatierte Aluminiumbleche mit einer Blechdicke von 0,58 mm, die mit einem handelsüblichen, tiefziehfähigen Korrosionsschutzprimer (Polycoat® 21-209-9544 CC-Primer von der Fa. Bollig & Kemper) mit einer Filmdicke von 15 µm beschichtet sind.
Auf diese Primerschicht wird der zuvor hergestellte Basislack so appliziert, daß eine Trockenschichtdicke von 15 µm erhalten wird. Die Trocknung der Basislackschicht erfolgt bei einer PMT (peak metal temperature) von 249 °C. Anschließend wird auf diese Basislackschicht ein gemäß dem Beispiel und dem Vergleichsbeispiel hergestellter Klarlack aufgebracht, so daß in vernetztem Zustand eine Klarlackschicht mit einer Trockenschichtdicke von 15 µm erhalten wird. Diese Klarlackschicht wird ebenfalls bei einer PMT von 249 °C gehärtet.

Die so erhaltenen Mehrschichtlackierungen werden gemäß den nachstehend beschriebenen Prüfverfahren auf folgende Eigenschaften untersucht: Glanz, Bleistifthärte, Rißbildung nach Biegung, Chemikalienbeständigkeit, Helligkeit und Knoop-Härte.
Die Ergebnisse der Untersuchungen sind in der Tabelle I angegeben.

### Prüfung des Glanzes:

Die Glanzbestimmung wurde gemäß den Normen DIN 67539, ISO 2813 und ASTM D 523 mit einem Gloss-Meßgerät der Firma Byk-Gardner bei einem Meßwinkel von 20 °C durchgeführt.

### Prüfung der Bleistifthärte:

Die Lackoberfläche wird mit Hilfe von Bleistiften jeweils größerer Härte im Winkel von 45 ° eingeritzt. Die Härte entspricht der des härtesten Bleistiftes, der nicht mehr in die Oberfläche der Beschichtung eindringt. Es wird ein Bleistiftsatz mit folgenden Härtegraden verwendet:
6B - 5B - 4B - 3B - 2B - B - HB - F - H - 2H - 3H - 4H - 5H - 6H.
Diese Prüfung wird üblicherweise mit der Hand durchgeführt, aber auch eine mechanische Vorrichtung kann benutzt werden, wobei eine Kraft von 7,5 Newton auf den Bleistift ausgeübt werden sollte.
Dieser Test wird in den ECCA-Prüfverfahren genau beschrieben unter ECCA-T4.
Die Referenznormen hierzu sind: ISO 3270-1984 / ASTM D 3363-1974 (reappr. 1980)

### Prüfung der Rißbildung nach Biegung (T-Bend Test)

Das beschichtete Blech wird um 360 ° so geknickt, daß der Lackfilm nach außen liegt. Dann wird es in einen Schraubstock gespannt und im Knickpunkt fest zusammen gepreßt (=> T0 ).
Mittels einer 10-fach vergrößernden Lupe wird die Knickstelle auf Risse untersucht. Sind Risse zu erkennen, wird das Blech um sich selbst gebogen, wobei der Radius des Knickes sich um die Blechstärke erhöht (=> T1).

Dieser Vorgang wird solange wiederholt, bis keine Schäden mehr auftreten. Bei jedem Knickvorgang erhöht sich der T-Wert um 0,5. Angegeben wird der T-Wert bei welchem keine Risse mehr zu erkennen sind.
Dieser Test wird in den ECCA-Prüfverfahren genau beschrieben unter ECCA-T7.
Die Referenznormen hierzu sind: EN2370:1991 / EN ISO 1519:1995 / EN ISO 6860:1995 / ASTM D 522-93a.

### Prüfung der Chemkalienbeständigkeit von Lackoberflächen mittels Verwendung eines Gradientenofens

Ein von der Fa. Byk-Mallinckrodt entwickelter Gradientenofen wird dazu verwendet, mittels mikroprozessorgestützter Steuerung ein einziges Prüfblech, welches mit der zu untersuchenden Mehrschichtlackierung überzogen ist, so zu erhitzen, daß nach Beendigung des Einbrennvorgangs ein kontinuierlicher Bereich wählbarer Temperaturen für physikalische Prüfungen zur Verfügung steht.
Innerhalb eines Arbeitsbereiches von +50 °C bis 250 °C können bis zu vier verschiedene Heizzonen mit einer konstanten Temperatur beliebig eingestellt werden.
Zur Prüfung der Chemikalienbeständigkeit wird wie folgt verfahren::
- Das Gradientenblech wird mit dem zu prüfenden Lack beschichtet und eingebrannt.
- Die Prüfchemikalien (nach Kundenspezifikation) werden reihenweise im gleichen Abstand auf den Lackfilm aufgebracht. Bis zu fünf Chemikalien können gleichzeitig auf das Blech aufgetragen werden.
- Das Prüfblech wird in den (kundenspezifisch) vorgeheizten Gradientenofen eingelegt und zugefahren.
- Nach einer Belastungsdauer von (kundenspezifisch) 30min fährt der Ofen auf und es erfolgt ein Ausdruck der Temperaturzonen.
- Das entnommene Blech wird unter (kundenspezifisch) fließendem Wasser gereinigt und anschließend beurteilt.
- Die Beurteilung erfolgt einmal sofort und/oder nach 24 Stunden (kundenspezifisch).

Beurteilt werden kann nach unterschiedlichen Methoden (kundenpezifisch):
- in fünf Kategorien: i.O. / leicht gequollen / gequollen / Lack beschädigt / Lack abgelöst; oder
- anhand der Temperatur, bei der noch keine sichtbare Veränderung der belasteten Lackoberfläche zu erkennen ist.

Beispiele für Kundenspezifikationen sind von BMW die Norm PA 15/050L und von Daimler-Chrysler (Werk Sindelfingen) die Norm PBODC 371.

### Prüfung des Orange Peel (Welligkeit)

Wellige Strukturen in der fertigen Lackbeschichtung mit einer Größe von ca. 0,1 bis 10 nm werden als "Orange Peel" bezeichnet.
Solche Effekte werden oft visuell, also subjektiv beurteilt und mit Begriffen wie "speckig" oder "griesig" beschrieben. Orange Peel sehen wir als ein Muster heller und dunkler Felder. Die Erkennbarkeit der Strukturen hängt vom Betrachtungsabstand ab.
- Langwelligkeit ist aus einer Entfernung von ca. 3 m erkennbar
- Kurzwelligkeit wird erst bei kurzem Abstand sichtbar (ca. 50 cm)

Um diesen Effekt in Zahlen zu fassen wird das Wave-Scan plus von Byk-Gardner eingesetzt.
Die Oberfläche (welliges Helligkeitsmuster) wird mittels einer Laser-Punktlichtquelle unter einem Winkel von 60 ° und einem Detektor auf der Gegenseite optisch abgetastet.
Das Meßgerät wird über eine Strecke von 10 cm bewegt und vermißt so von Punkt zu Punkt das optische Helligkeitsprofil. Das Meßsignal wird in zwei Anteile aufgeteilt:
- Langwelligkeit (Stukturen > 0,6 mm)
- Kurzwelligkeit (Stukturen < 0,6 mm)

Die von der Automobilindustrie geforderten Werte sind:
- Langwelligkeit: 4-7 (sehr gut)
- Kurzwelligkeit: 18-22 (sehr gut)

### Prüfung der Knoop-Eindruckhärte

Die Bestimmung der Härte einer organischen Beschichtung wurde mittels eines Kleinlast-Härteprüfer (LEITZ MINILOAD) der Firma Leitz durchgeführt. Die plastische Verformung der Beschichtung wird bestimmt durch Messen der Länge des Eindrucks, hervorgerufen durch ein Werkzeug (Diamantspitze) mit festgelegter Form (Rautenform) und Abmessung unter definierten Prüfbedingungen (Einwirkzeit, Gewicht, Temperatur etc.)
Die Länge des Eindrucks ist umgekehrt proportional zur Härte des Lackfilms., d.h. je kleiner der Eindruck desto härter die Lackoberfläche, desto größer der Zahlenwert der Knoop-Härte.
Nähere Ausführungen (Berechnungsformel usw.) zu den Prüfbedingungen sind in den Unterlagen des Knoop-Härte-Prüfgeräts der Firma Leitz zu finden.

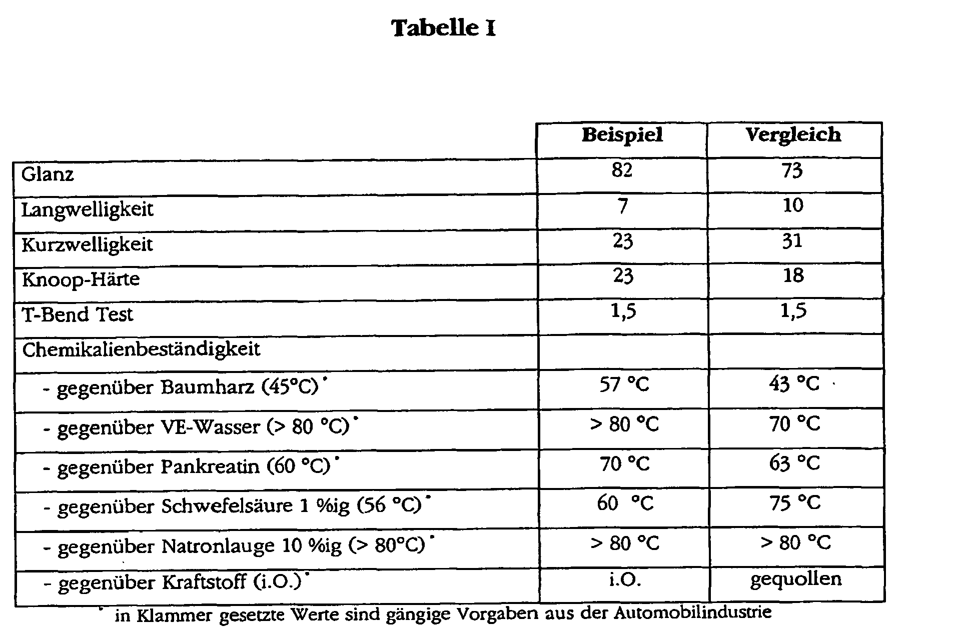

Die Tabelle I zeigt deutlich, daß die erfindungsgemäße Beschichtungszusammensetzung alle Anforderungen der Automobilindustrie erfüllt und einem Klarlack gemäß dem Stand der Technik im Hinblick auf Glanz und Optik deutlich überlegen ist.

## Patentansprüche

1. Beschichtungszusammensetzung, erhältlich durch Polyaddition einer nicht-wässrigen Ausgangsmischung, enthaltend:
(1) 10 bis 70 Gew.-% einer nicht-wässrigen Lösung eines Polymers auf Acrylatbasis mit einer OH-Zahl zwischen 100 und 250, erhältlich durch radikalische Polymerisation einer Monomerenmischung enthaltend mindestens eine polycycloaliphatische Verbindung mit mindestens 2 Cyclen und einem Brechungsindex bei 20 °C von mindestens 1,460;
(2) 10 bis 70 Gew.-% einer nicht-wässrigen Lösung eines fluormodifizierten Polymers mit einer Glasübergangstemperatur zwischen 20 und 40 °C; und
(3) 20 bis 60 Gew.-% mindestens eines blockierten aliphatischen oder cycloaliphatischen Polyisocyanats;
wobei das Gewichtsverhältnis von Komponente (1) zu Komponente (2) höchstens 1 beträgt und die Summe der Komponenten (1), (2) und (3) 100 % beträgt, bezogen auf den Bindemittelgehalt der zu vernetzenden Ausgangsmischung.

2. Beschichtungszusammensetzung nach Anspruch 1, **dadurch gekennzeichnet, dass** die Komponente (1) erhältlich ist durch radikalische Polymerisation einer Monomerenmischung, enthaltend:
(i) 30 bis 60 Gew.-% mindestens einer polycycloaliphatischen Verbindung mit mindestens 2 Cyclen und einem Brechungsindex bei 20 °C von mindestens 1,460;
(ii) 25 bis 70 Gew.-% mindestens eines C₂-C₄-Hydroxyalkyl(meth)acrylats mit primären Hydroxylgruppen;
(iii) 0,1 bis 1 Gew.-% Acrylsäuce;
wobei die Summe der Komponenten (1), (2) und (3) 100 Gew.-%, bezogen auf das Monomerengemisch, beträgt.

3. Beschichtungszusammensetzung nach Anspruch 2, **dadurch gekennzeichnet, dass** die Monomerenmischung zusätzlich 5 bis 25 Gew.-% eines Vinylesters einer verzweigten Monocarbonsäure mit durchschnittlich 9 Kohlenstoffatomen enthält.

4. Beschichtungszusammensetzung nach Anspruch 2 oder 3, **dadurch gekennzeichnet, dass** die polycycloaliphatische Verbindung Isobomylmethacrylat ist.

5. Beschichtungszusammensetzung nach einem der Ansprüche 2 bis 4, **dadurch gekennzeichnet, dass** die polycycloaliphatische Verbindung der Komponente (i) ausgewählt ist aus einem Acrylcopolymerisat, erhältlich durch Modifizierung eines mindestens eine Epoxygruppe aufweisenden Acrylcopolymerisats durch einen eine Carboxylgruppe enthaltenden polycycloaliphatischen Stoff mit mindestens 2 Cyclen mit einem Brechungsindex bei 20 °C von mindestens 1,460, wobei die Epoxygruppe aus Glycidylmethacrylat stammt.

6. Beschichtungszusammensetzung nach Anspruch 5, **dadurch gekennzeichnet, dass** das Molverhältnis von Carboxylgruppe zu Epoxygruppe zwischen 0,5 bis 1,0, vorzugsweise zwischen 0,8 und 1,0, besonders bevorzugt zwischen 0,9 und 1,0, liegt.

7. Beschichtungszusammensetzung nach Anspruch 6, **dadurch gekennzeichnet, dass** der eine Carboxylgruppe enthaltende polycycloaliphatische Stoff eine polycycloaliphatische Verbindung enthält, die bei erhöhter Temperatur zusätzlich mit Polycarbonsäuren und/oder deren Anhydriden unter Halbesterbildung weiter umgesetzt worden ist.

8. Beschichtungszusammensetzung nach einem der Ansprüche 5 bis 7, **dadurch gekennzeichnet, dass** der eine Carboxylgruppe enthaltende Stoff einen Brechungsindex bei 20 °C von mindestens 1,480 hat

9. Beschichtungszusammensetzung nach einem der Ansprüche 5 bis 8, **dadurch gekennzeichnet, dass** der eine Carboxylgruppe enthaltende polycycloaliphatische Stoff eine tricycloaliphatische Monocarbonsäure aus der Gruppe von hydrierten Naturharzsäuren; Adamantancarbonsäuren; und tricyclischen Monocarbonsäuren, die sich vom Dicyclopentadien ableiten, wie z.B. Tricyclo[5.2.1.0.^{2,6}]decan-8-carbonsäure; vorzugsweise Tetrahydroabietinsäure, ist.

10. Beschichtungszusammensetzung nach einem der Ansprüche 5 bis 9, **dadurch gekennzeichnet, dass** der eine Carboxylgruppe enthaltende polycycloaliphatische Stoff ein Reaktionsprodukt aus mindestens zwei Verbindungen ist, von denen mindestens eine eine polycycloaliphatische Verbindung mit einen Brechungsindex bei 20 °C von mindestens 1,460, vorzugsweise von mindestens 1,480, ist.

11. Beschichtungszusammensetzung nach Anspruch 10, **dadurch gekennzeichnet, dass** mindestens eine der polycycloaliphatischen Verbindungen, die einen Brechungsindex bei 20 °C von mindestens 1,480 hat, mindestens zu 10 Gew.-%, vorzugsweise mindestens zu 20 Gew.-%, und insbesondere mindestens zu 50 Gew.-%. in dem eine Carboxylgruppe enthaltenden polycycloaliphatischen Reaktionsprodukt enthalten ist.

12. Beschichtungszusammensetzung nach Anspruch 10 oder 11, **dadurch gekennzeichnet, dass** die polycycloaliphatische Verbindung ein tricycloaliphatischer Monoalkohol aus der Gruppe der perhydrierten Naturharze wie Perhydroabietylalkohol; der Dicyclopentadien-Derivate, wie beispielsweise 8-Hydroxytricyclo[5.2.1.0^{2,6}]decan, 8-Hydroxymethyltricyclo[5.2.1.0^{2,6}]decan, 8-Hydroxytricyclo[5.2.1.0^{2,6}]dec-3-en, 9-Hydroxytricyclo[5.2.1.0^{2,6}]dec-3-en, ist.

13. Beschichtungszusammensetzung nach einem der Ansprüche 10 bis 12, **dadurch gekennzeichnet, dass** die polycycloaliphatische Verbindung eine Dicarbonsäure und deren Anhydrid aus der Gruppe von hydrierten Naturharzsäuren; Adamantancarbonsäuren; und tricyclischen Monocarbonsäuren, die sich vom Dicyclopentadien ableiten, wie z.B. Tricyclo[5.2.1.0.^{2,6}]decan-8-carbonsäure; vorzugsweise Tetrahydroabietinsäure, ist.

14. Beschichtungszusammensetzung nach einem der Ansprüche 5 bis 13, **dadurch gekennzeichnet, dass** der eine Carboxylgruppe enthaltende polycycloaliphatische Stoff zusätzlich eine oder mehrere aromatische Verbindungen enthält.

15. Beschichtungszusammensetzung nach Anspruch 14, **dadurch gekennzeichnet, dass** die aromatische Verbindung ausgewählt ist aus der Gruppe von aromatischen Monocarbonsäuren wie Naphthoesäure; Benzolmonocarbonsäuren wie Benzoesäure, o-Toluylsäure, m-Toluylsäure, p-Toluylsäure, Hydroxybenzoesäure, tert.-Butylbenzoesäure; aromatischen heterocyclischen Monocarbonsäuren wie Pyridincarbonsäuren und Furancarbonsäuren.

16. Beschichtungszusammensetzung nach einem der Ansprüche 2 bis 15, **dadurch gekennzeichnet, dass** das C₂-C₄-Hydroxyalkyl(meth)acrylat ausgewählt ist aus 2-Hydroxyethyl(meth)acrylat und 4-Hydroxybutyl(meth)acrylat.

17. Beschichtungszusammensetzung nach einem der Ansprüche 2 bis 16, **dadurch gekennzeichnet, dass** bis zu 50 % der primären Hydroxylgruppen des C₂-C₄-Hydroxyalkyl(meth)acrylats durch sekundäre Hydroxylgruppen ersetzt sind.

18. Beschichtungszusammensetzung nach Anspruch 17, **dadurch gekennzeichnet, dass** das C₂-C₄-Hydroxyalkyl(meth)acrylat ausgewählt ist aus 2-Hydroxypropyl(meth)-acrylat, 2-Hydroxybutyl(meth)acrylat und Hexandiol-1,6-mono(meth)acrylat.

19. Beschichtungszusammensetzung nach einem der vorhergehenden Ansprüche, **dadurch gekennzeichnet, dass** das fluormodifizierte Polymer ein Polymer auf Basis fluorhaltiger Vinylether ist mit einem Fluorgehalt zwischen 25 und 30 %, einer Glasübergangstemperatur zwischen 16 und 45 °C und einer Hydroxylzahl zwischen 45 und 90.

20. Beschichtungszusammensetzung nach einem der vorhergehenden Ansprüche, **dadurch gekennzeichnet, dass** das blockierte aliphatische oder cycloaliphatische Polyisocyanat ein blockiertes, in trimerisierter oder Biuretform vorliegendes Isophorondiisocyanat (IPDI, 3,5,5-Trimethyl-1-isocyanato-3-isocyanatomethylcyclohexan) und/oder 2,4,6-Trioxo-1,3.5-tris(6-isocyanatohexyl)hexahydro-1,3,5-triazin ist.

21. Verwendung einer Beschichtungszusammensetzung nach einem der vorhergehenden Ansprüche als Klarlack, insbesondere in der Automobilindustrie.

22. Verwendung einer Beschichtungszusammensetzung, erhältlich durch Polyaddition einer nicht-wässrigen Ausgangsmischung, enthaltend:
(1) 10 bis 70 Gew.-% einer nicht-wässrigen Lösung eines Polymers auf Acrylatbasis mit einer OH-Zahl zwischen 100 und 250;
(2) 10 bis 70 Gew.-% einer nicht-wässrigen Lösung eines fluormodifizierten Polymers mit einer Glasübergangstemperatur zwischen 20 und 40 °C; und
(3) 20 bis 60 Gew.-% mindestens eines blockierten aliphatischen oder cycloaliphatischen Polyisocyanats;
wobei das Gewichtsverhältnis von Komponente (1) zu Komponente (2) höchstens 1 beträgt und die Summe der Komponenten (1), (2) und (3) 100 % beträgt, bezogen auf den Bindemittelgehalt der zu vemetzenden Ausgangsmischung, zur Beschichtung von Metallbändern im Bandlackierverfahren.

23. Verwendung nach Anspruch 22 zur Herstellung einer Mehrschichtlackierung durch
• Aufbringen einer Primerschicht auf einem vorbehandelten metallischen Substrat und Einbrennen derselben bei einer Temperatur zwischen. 180 - 260 °C;
• Aufbringen einer farbgebenden Basislackschicht und Einbrennen derselben bei einer Temperatur zwischen 180 - 260 °C;
• Aufbringen einer Beschichtungszusammensetzung nach einem der Ansprüche 1 bis 19 und Einbrennen derselben bei einer Temperatur zwischen 180 - 260 °C.

24. Verwendung nach Anspruch 22 oder 23 zur Herstellung von Automobilteilen durch Tiefziehen der in Wagenfarbe vorbeschichteten Metallbänder.

25. Verwendung nach Anspruch 23 oder 24, **dadurch gekennzeichnet, dass** die Schichtdicken der Primerschicht, Basislackschicht und der aus der Beschichtungszusammensetzung erhältlichen Klarlackschicht in vernetztem Zustand jeweils zwischen 10 und 25 µm liegen.

## Claims

1. Coating composition obtainable by polyaddition of a non-aqueous starting mixture, comprising:
(1) 10 wt.% to 70 wt.% of a non-aqueous solution of a polymer based on acrylate with an OH number between 100 and 250, obtainable by radical polymerization of a monomer mixture comprising at least one polycycloaliphatic compound with at least 2 rings and a refractive index at 20 °C of at least 1,460;
(2) 10 wt.% to 70 wt.% of a non-aqueous solution of a fluorine-modified polymer having a glass transition temperature between 20 and 40 °C and
(3) 20 wt.% to 60 wt.% of at least one blocked aliphatic or cycloaliphatic polyisocyanate;
the weight ratio of component (1) to component (2) amounting to at most 1, and the sum of components (1), (2) and (3) amounting to 100 %, based on the binder content of the starting mixture to be crosslinked.

2. Coating composition according to claim 1, **characterized in that** component (1) is obtainable by radical polymerization of a monomer mixture comprising:
(i) 30 wt.% to 60 wt.% of at least one polycycloaliphatic compound with at least 2 rings and a refractive index at 20 °C of at least 1.460;
(ii) 25 wt.% to 70 wt.% of at least one C₂ -C₄ hydroxyalkyl(meth)acrylate with primary hydroxyl groups;
(iii) 0.1 to 1 wt.% acrylic acid;
the sum of components (1), (2) and (3) amounting to 100 wt.%, based on the monomer mixture.

3. Coating composition according to claim 2, **characterized in that** the monomer mixture additionally comprises 5 wt.% to 25 wt.% of a vinyl ester of a branched monocarboxylic acid having an average of 9 carbon atoms.

4. Coating composition according to claim 2 or 3, **characterized in that** the polycycloaliphatic compound is isobornyl methacrylate.

5. Coating composition according to one of claims 2 to 4, **characterized in that** the polycycloaliphatic compound of component (i) is selected from an acrylic copolymer obtainable by modifying an acrylic copolymer having at least one epoxy group with a polycycloaliphatic substance comprising a carboxyl group and having at least two rings with a refractive index at 20 °C of at least 1.460, the epoxy group originating from glycidyl methacrylate.

6. Coating composition according to claim 5, **characterized in that** the molar ratio of carboxyl group to epoxy group is between 0.5 and 1.0, preferably between 0.8 and 1.0, especially preferably between 0.9 and 1.0.

7. Coating composition according to claim 6, **characterized in that** the polycycloaliphatic substance comprising a carboxyl group also comprises a polycycloaliphatic compound which has been reacted further at elevated temperature with polycarboxylic acids and/or their anhydrides to form a half ester.

8. Coating composition according to one of claims 5 to 7, **characterized in that** the substance comprising a carboxyl group has a refractive index at 20 °C of at least 1.480.

9. Coating composition according to one of claims 5 to 8, **characterized in that** the polycycloaliphatic substance comprising a carboxyl group is a tricycloaliphatic monocarboxylic acid from the group of hydrogenated natural resin acids; adamantane carboxylic acids and tricyclic monocarboxylic acids derived from dicyclopentadiene, e.g. tricyclo[5.2.1.0.^{2,6}]decane-8-carboxylic acid, preferably tetrahydroabietic acid.

10. Coating composition according to one of claims 5 to 9, **characterized in that** the polycycloaliphatic substance comprising a carboxyl group is a reaction product of at least two compounds, at least one of which is a polycycloaliphatic compound having a refractive index at 20 °C of at least 1.460, preferably at least 1.480.

11. Coating composition according to claim 10, **characterized in that** at least one of the polycycloaliphatic compounds having a refractive index at 20 °C of at least 1.480 is present in an amount of at least 10 wt.%, preferably at least 20 wt.%, and in particular at least 50 wt.% in the polycycloaliphatic reaction product comprising a carboxyl group.

12. Coating composition according to claim 10 or 11, **characterized in that** the polycycloaliphatic compound is a tricycloaliphatic monoalcohol from the group of perhydrogenated natural resins such as perhydroabietyl alcohol; the dicyclopentadiene derivatives such as e.g. 8-hydroxytricyclo[5.2.1.0.^{2,6}]decane, 8- hydroxymethyltricyclo-[5.2.1.0. ^{2,6}]decane, 8-hydroxytricyclo[5.2.1.0.^{2,6}] dec-3-ene, 9-hydroxytricyclo-[5.2.1.0.^{2,6}]dec-3-ene.

13. Coating composition according to one of claims 10 to 12, **characterized in that** the polycycloaliphatic compound is a dicarboxylic acid and its anhydride from the group of hydrogenated natural resin acids; adamantane-carboxylic acids; and tricyclic monocarboxylic acids derived from dicyclopentadiene such as tricyclo[ 5.2.1.0.^{2,6}]decane-8-carboxylic acid, preferably tetrahydroabietic acid.

14. Coating composition according to one of claims 5 to 13, **characterized in that** the polycycloaliphatic substance comprising a carboxyl group additionally comprises one or more aromatic compounds.

15. Coating composition according to claim 14, **characterized in that** the aromatic compound is selected from the group of aromatic monocarboxylic acids such as naphthoic acid, benzenemonocarboxylic acid such as benzoic acid, o-toluic acid, m-toluic acid, p-toluic acid, hydroxybenzoic acid, tert-butylbenzoic acid, aromatic heterocyclic monocarboxylic acids such as pyridine carboxylic acids and furancarboxylic acids.

16. Coating composition according to one of claims 2 to 15, **characterized in that** the C₂ - C₄ hydroxyalkyl (meth)acrylate is selected from 2-hydroxyethyl (meth)acrylate and 4-hydroxybutyl (meth)acrylate.

17. Coating composition according to one of claims 2 to 16, **characterized in that** up to 50 % of the primary hydroxyl groups of the C₂ - C₄ hydroxyalkyl (meth)acrylate are replaced by secondary hydroxyl groups.

18. Coating composition according to claim 17, **characterized in that** the C₂ -C₄ hydroxyalkyl (meth)acrylate is selected from 2-hydroxypropyl(meth)acrylate,2hydroxybutyl (meth)acrylate and hexanediol-1,6-mono(meth)acrylate.

19. Coating composition according to one of the preceding claims, **characterized in that** the fluorine-modified polymer is a polymer based on fluorine comprising vinyl ether with a fluorine content between 25 % and 30%, a glass transition temperature between 16 °C and 45 °C and a hydroxyl number between 45 and 90.

20. Coating composition according to one of the preceding claims, **characterized in that** the blocked aliphatic or cycloaliphatic polyisocyanate is a blocked isophorone diisocyanate (IPDI, 3,5,5-trimethyl-1-isocyanato-3-isocyanatomethylcyclohexane) and/or 2,4,6-trioxo-1,3,5-tris(6-isocyanatohexyl)hexahydro-1,3,5-triazine present in trimerized or in biuret form.

21. Use of a coating composition according to one of the preceding claims as clear coat, in particular in the automotive industry.

22. Use of a coating composition obtainable by polyaddition of a non-aqueous starting mixture, comprising:
(1) 10 wt.% to 70 wt.% of a non-aqueous solution of a polymer based on acrylate with an OH number between 100 and 250
(2) 10 wt.% to 70 wt.% of a non-aqueous solution of a fluorine-modified polymer having a glass transition temperature between 20 and 40 °C and
(3) 20 wt.% to 60 wt.% of at least one blocked aliphatic or cycloaliphatic polyisocyanate;
the weight ratio of component (1) to component (2) amounting to at most 1, and the sum of components (1 ), (2) and (3) amounting to 100 %, based on the binder content of the starting mixture to be crosslinked, for coating metal coils in the coil coating process.

23. Use according to claim 22 for the production of a multilayer coating by
• applying a primer layer to a pretreated metallic substrate and baking the same at a temperature between 180 °C and 260 °C;
• applying a color-imparting base-coat layer and baking the same at a temperature between 180 °C and 260 °C;
• applying a coating composition according to one of claims 1 to 19 and baking the same at a temperature between 180 °C and 260 °C.

24. Use according to claim 22 or 23 to produce automobile parts by deep drawing the metal coils precoated in the color of the vehicle.

25. Use according to claim 23 or 24, **characterized in that** the layer thicknesses of the primer layer, the base-coat layer and the clear coat layer obtainable from the coating composition are each between 10 µm and 25 µm in the crosslinked state.

## Revendications

1. Composition de revêtement obtenue par polyaddition d'un mélange de départ non aqueux, contenant:
(1) 10 à 70 % en poids d'une solution non aqueuse d'un polymère à base d'acrylate ayant un indice OH compris entre 100 et 250, obtenu par polymérisation radicalique d'un mélange de monomères contenant au moins un composé polycycloaliphatique avec au moins 2 cyclènes et un indice de réfraction à 20°C d'au moins 1,460 ;
(2) 10 à 70 % en poids d'une solution non aqueuse d'un polymère modifié au fluor ayant une température de transition de vitreuse comprise entre 20 et 40°C et
(3) au moins 20 à 60 % en poids d'un polyisocyanate aliphatique ou cycloaliphatique bloqué ;
le rapport pondéral entre le composant (1) et le composant (2) étant tout au plus de 1 et la somme des composants (1), (2) et (3) étant de 100 %, par rapport au taux de liant du mélange de départ à réticuler.

2. Composition de revêtement selon la revendication 1, **caractérisée en ce que** le composant (1) est obtenu par polymérisation radicalique d'un mélange de monomères, contenant :
(i) au moins 30 à 60 % en poids d'un composé polycycloaliphatique avec au moins 2 cyclènes et un indice de réfraction à 20°C d'au moins 1,460 ;
(ii) au moins 25 à 70 % en poids d'un C₂-C₄- hydroxyalkyl(méth)acrylate comportant des groupes hydroxyles :
(iii) 0,1 à 1 % en poids d'acide acrylique ;
la somme des composants (1 ), (2) et (3) par rapport au mélange de monomères étant de 100 % en poids.

3. Composition de revêtement selon la revendication 2, **caractérisée en ce que** le mélange de monomères contient en plus 5 à 25 % en poids d'un vinylester d'un acide monocarbonique ramifié ayant en moyenne 9 atomes de carbone.

4. Compostion de revêtement selon l'une des revendications 2 et 3, **caractérisée en ce que** le composé polycycloaliphatique est le méthacrylate isobornylique.

5. Composition de revêtement selon l'une des revendications 2 à 4, **caractérisée en ce que** le composé polycycloaliphatique du composant (i) est choisi parmi un copolymère acrylique obtenu par modification d'un copolymère acrylique présentant au moins un groupe époxy par une substance polycycloaliphatique contenant un groupe carboxyle ayant au moins 2 cyclènes et un indice de réfraction à 20°C d'au moins 1,460, le groupe époxy provenant du méthacrylate glycidylique.

6. Composition de revêtement selon la revendication 5, **caractérisée en ce que** le rapport molaire entre le groupe carboxyle et le groupe époxy est compris entre 0,5 et 1,0, de préférence entre 0,8 et 1,0 et tout particulièrement entre 0,9 et 1,0.

7. Composition de revêtement selon la revendication 6, **caractérisée en ce que** la substance polycycloaliphatique contenant un groupe carboxyle contient un composé polycycloaliphatique qui a encore été transformé supplémentairement avec des acides polycarboniques et/ou leurs anhydrides, à température élevée, avec semi-estérification.

8. Composition de revêtement selon l'une des revendications 5 à 7, **caractérisée en ce que** la substance contenant un groupe carboxyle présente un indice de réfraction à 20°C d'au moins 1,480.

9. Composition de revêtement selon l'une des revendications 5 à 8, **caractérisée en ce que** la substance polycycloaliphatique contenant un groupe carboxyle est un acide monocarbonique tricycloaliphatique choisi parmi le groupe des acides résiniques naturels hydratés, des acides carboniques d'adamantane et des acides monocarboniques tricycliques dérivés des dicyclopentadiènes, comme par ex. l'acide tricyclo [5.2.1.0.^{2,6}]décane-8-carbonique, de préférence l'acide tétrahydroabiétique.

10. Composition de revêtement selon l'une des revendications 5 à 9, **caractérisée en ce que** la substance polycycloaliphatique contenant un groupe carboxyle est un produit réactionnel à base d'au moins deux composés, dont l'un au moins est un composé polycycloaliphatique ayant un indice de réfraction à 20°C d'au moins 1,460, de préférence d'au moins 1,480.

11. Composition de revêtement selon la revendication 10, **caractérisée en ce qu'**au moins un des composés polycycloaliphatiques ayant un indice de réfraction à 20°C d'au moins 1,480, est représenté à un un taux d'au moins 10 % en poids, de préférence d'au moins 20 % en poids et en particulier d'au moins 50 % en poids, dans le produit réactionnel polycycloaliphatique contenant un groupe carboxyle.

12. Composition de revêtement selon l'une des revendications 10 et 11, **caractérisée en ce que** le composé polycycloaliphatique est un monoalcool tricycloaliphatique choisi parmi le groupe des résines naturelles perhydratées telles que l'alcool perhydroabiétylique; des dérivés du di-cyclopentadiène tels que par ex. le 8-hydroxy-tricyclo[5.2.1.0^{2,6}]-décane, le 8-hydroxyméthyltricyclo-[5.2.1.0^{2,6}]décane, le 8-hydroxytricyclo[5.2.1.0^{2,6}]déc-3-ène, le 9-hydroxytricyclo[5.2.1.0^{2,6}]déc-3-ène.

13. Composition de revêtement selon l'une des revendications 10 à 12, **caractérisée en ce que** le composé polycycloaliphatique est un acide dicarbonique et son anhydride choisis parmi le groupe des acides résiniques naturels hydratés; les acides carboniques d'adamantane et les acides monocarboniques tricycliques dérivés du dicyclopentadiène, comme par ex. l'acide carbonique de tricyclo[5.2.1.0^{2,6}]décane-8, de préférence l'acide tétrahydroabiétique.

14. Composition de revêtement selon l'une des revendications 5 à 13, **caractérisée en ce que** la substance polycycloaliphatique contenant un groupe carboxyle contient en plus un ou plusieurs composés aromatiques.

15. Composition de revêtement selon la revendication 14, **caractérisée en ce que** le composé aromatique est choisi parmi le groupe des acides monocarboniques aromatiques tels que l'acide naphtoïque; des acides monocarboniques de benzène tels que l'acide benzoïque, l'acide o-toluique, l'acide m-toluique, l'acide n-toluique, l'acide hydroxybenzoïque, l'acide butylbenzoïque tert.; des acides monocarboniques hétérocycliques aromatiques tels que les acides carboniques de pyridine et les acides carboniques de furane.

16. Composition de revêtement selon l'une des revendications 2 à 15, **caractérisée en ce que** le C₂-C₄-hydroxyalkyl(méth)acrylate est choisi parmi le 2-hydroxyéthyt(méth)acrylate et le 4-hydroxy-butyl(méth)acrylate.

17. Composition de revêtement selon l'une des revendications 2 à 16, **caractérisée en ce que** jusqu'à 50 % des groupes hydroxyles primaires du C₂-C₄-hydroxyalkyl(méth)acrylate sont remplacés par des groupes hydroxyles secondaires.

18. Composition de revêtement selon la revendication 17, **caractérisée en ce que** le C₂-C₄₋hydroxyalkyl(méth)acrylate est choisi parmi le 2-hydroxypropyl(méth)acrylate, le 2-hydroxybutyl(méth)acrylate et l'hexane-diol-1,6-mono-(méth)acrylate.

19. Composition de revêtement selon l'une quelconque des revendications précédentes, **caractérisée en ce que** le polymère modifié au fluor est un polymère à base d'éther vinylique fluoré ayant un taux de fluor compris entre 25 et 30 %, une température de transition vitreuse comprise entre 16 et 45°C et un indice hydroxyle compris entre 45 et 90.

20. Composition de revêtement selon l'une quelconque des revendications précédentes, **caractérisée en ce que** le polyisocyanate aliphatique ou cycloaliphatique bloqué est un diisocyanate d'isophorone bloqué se présentant sous forme de trimère ou sous forme de Biuret (IPDI, 3,5,5-triméthyl-1-isocyanato-3-isocyanatométhylcyclohexane) et/ou 2,4,6-trioxo-1,3,5-tris(6-isocyanatohexyl)hexahydro-1,3,4-triazine.

21. Utilisation d'une composition de revêtement selon l'une quelconque des revendications précédentes en tant que laque transparente, notamment dans l'industrie automobile.

22. Utilisation d'une composition de revêtement, obtenue par polyaddition d'un mélange de départ non aqueux, contenant :
(1) 10 à 70 % en poids d'une solution non aqueuse d'un polymère à base d'acrylate ayant un indice OH compris entre 100 et 250 ;
(2) 10 à 70 % en poids d'une solution non aqueuse d'un polymère modifié au fluor ayant une température de transition vitreuse comprise entre 20 et 40°C et
(3) au moins 20 à 60 % en poids d'un polyisocyanate aliphatique ou cycloaliphatique bloqué ; le rapport pondéral entre le composant (1) et le composant (2) étant tout au plus de 1 et la somme des composants (1), (2) et (3) étant de 100 %, par rapport au taux de liant du mélange de départ à réticuler, pour le revêtement de bandes de métal dans le procédé de couchage sur bande.

23. Utilisation selon la revendication 22 pour la fabrication d'un laquage à plusieurs couches par
• application d'une couche de fond sur un substrat métallique prétraité et laquage au four de celle-ci à une température de 180 - 260°C ;
• application d'une couche de vernis de base chromophore et laquage au four de celle-ci à une température de 180 - 260°C ;
• application d'une composition de revêtement selon l'une des revendications 1 à 19 et laquage au four de celle-ci à une température de 180 - 260°C.

24. Utilisation selon l'une des revendications 22 et 23 pour la fabrication de pièces d'automobile par emboutissage des bandes de métal prélaquées dans la couleur de l'automobile.

25. Utilisation selon l'une des revendications 23 et 24, **caractérisée en ce que** les épaisseurs de la couche de fond, de la couche de vernis de base et de la couche de laque transparente obtenue à partir de la composition de revêtement sont, à l'état réticulé, respectivement comprises entre 10 et 25 µm.
